# FASCICULE DE BREVET EUROPEEN

(11) **EP 4 078 575 B1**
(45) Date de publication et mention de la délivrance du brevet: **17.01.2024**
(21) Numéro de dépôt: 20803564.2
(22) Date de dépôt: 10.11.2020
(51) Int. Cl.: G10L 17/20, B60R 16/037, G10L 17/04

(54) **PROCEDE D'IDENTIFICATION D'AU MOINS UNE PERSONNE A BORD D'UN VEHICULE AUTOMOBILE PAR ANALYSE VOCALE**
VERFAHREN FÜR DIE IDENTIFIZIERUNG VON MINDESTENS EINER PERSON IM BEREICH EINES MOTORFAHRZEUGES DURCH STIMMANALYSE
METHOD FOR IDENTIFYING AT LEAST ONE PERSON ON BOARD A MOTOR VEHICLE BY VOICE ANALYSIS

(30) Priorité: 17.12.2019 FR 1914679
(43) Date de publication de la demande: 26.10.2022
(73) Titulaire: Renault s.a.s, 92100 Boulogne Billancourt (FR)
(72) Inventeur: GUILLEMET, Patrick, 69330 Meyzieu (FR); ROSSELLO, Norbert, 06410 Biot (FR)
(86) Numéro de dépôt international: PCT/EP2020/081642
(87) Numéro de publication internationale: WO 2021/121784

(56) Documents cités:
- FR-A1- 2 837 971
- FR-B1- 2 837 971
- US-A- 5 970 446
- US-A1- 2009 119 103
- US-A1- 2017 263 257
- US-A1- 2018 211 671
- CAO YIMING ET AL: "A novel speaker verification approach for certain noisy environment", 2014 12TH INTERNATIONAL CONFERENCE ON SIGNAL PROCESSING (ICSP), IEEE, 19 octobre 2014 (2014-10-19), pages 549-554, XP032725296, ISSN: 2164-5221, DOI: 10.1109/ICOSP.2014.7015065 ISBN: 978-1-4799-2188-1 [extrait le 2015-01-19]

## Description

La présente invention concerne le domaine de l'identification de personnes à bord d'un véhicule.

L'invention concerne plus particulièrement un procédé d'identification d'au moins une personne à bord d'un véhicule automobile par analyse vocale. Des systèmes de reconnaissance vocale sont couramment embarqués à bord des véhicules récents. Un système de reconnaissance vocale comporte des moyens d'acquisition de signaux sonores dans l'habitacle du véhicule, des moyens de traitement de ces signaux sonores et une mémoire couplée aux moyens de traitement.

Il est connu d'utiliser un tel système de reconnaissance vocale pour identifier une personne à bord du véhicule. Un procédé d'identification peut consister, par exemple, à traiter un signal vocal d'un utilisateur à identifier pour en extraire des caractéristiques vocales qui sont comparées à des profils vocaux mémorisés dans la mémoire, chaque profil vocal comportant un ensemble de caractéristiques vocales spécifique d'une personne précédemment enregistrée et identifiée. Si le taux de correspondance entre les caractéristiques vocales du signal vocal et le profil vocal sélectionné est supérieur ou égal à un seuil prédéfini, l'utilisateur est identifié à la personne correspondant au profil vocal sélectionné. Un tel procédé est connu de US 2009/119103 A1.

Les profils vocaux sont obtenus dans un contexte d'utilisation du véhicule correspondant à un niveau sonore faible, par exemple à vitesse nulle, sans climatisation et les fenêtres étant fermées. En revanche, l'identification d'une personne à bord d'un véhicule peut être réalisée dans un contexte bruyant. Dans ce cas, le signal vocal faisant l'objet de l'identification est bruité et un écart important est observé entre les caractéristiques vocales du signal bruité et le profil vocal de la personne à identifier. L'identification de personnes est donc peu performante à bord d'un véhicule en raison de l'environnement bruyant que constitue l'habitacle.

L'invention propose une solution visant à pallier les inconvénients précités. Un objectif de l'invention est de proposer un procédé d'identification de personnes à bord d'un véhicule automobile par analyse vocale, le procédé étant fiable quel que soit le bruit présent dans l'habitacle.

L'invention propose un procédé d'identification d'au moins une personne à bord d'un véhicule automobile par analyse vocale, le véhicule étant équipé de moyens d'acquisition de signaux sonores dans l'habitacle du véhicule, de moyens de traitement de ces signaux sonores et d'une mémoire couplée aux moyens de traitement et configurée pour mémoriser des profils vocaux, chaque profil vocal comportant un ensemble de caractéristiques vocales spécifique d'une personne précédemment identifiée, le procédé comportant une phase d'identification comprenant les étapes suivantes :
- une étape d'acquisition et numérisation d'un signal vocal d'un utilisateur par les moyens d'acquisition pour obtenir un signal numérisé,
- une étape de traitement du signal numérisé par les moyens de traitement pour obtenir des caractéristiques vocales du signal numérisé,
- une étape de comparaison des caractéristiques vocales du signal numérisé avec un profil vocal sélectionné dans la mémoire,
- une étape d'établissement d'un taux de correspondance, en fonction de ladite comparaison entre les caractéristiques vocales du signal numérisé et le profil vocal sélectionné,
- une étape de comparaison du taux de correspondance avec un seuil prédéfini,
- une étape d'identification selon laquelle si le taux de correspondance est supérieur ou égal au seuil prédéfini, l'utilisateur est identifié comme étant la personne correspondant au profil vocal sélectionné, le profil vocal sélectionné à l'étape de comparaison des caractéristiques vocales étant un profil vocal contextuel comportant les caractéristiques vocales d'un signal sonore comprenant un signal vocal de référence émis par une personne précédemment identifiée et des bruits présents dans le véhicule dans un contexte d'utilisation du véhicule prédéterminé.

Selon une réalisation de l'invention, le profil vocal contextuel peut être obtenu dans une phase préliminaire effectuée après une étape initiale d'acquisition et numérisation d'un signal vocal de référence, émis par une personne précédemment identifiée, par les moyens d'acquisition, pour obtenir un signal vocal de référence numérisé,
et la phase préliminaire peut comporter les étapes suivantes :
- une étape d'acquisition et numérisation des bruits présents dans le véhicule, dans un contexte d'utilisation du véhicule prédéterminé, par les moyens d'acquisition, pour obtenir un signal de bruits numérisé,
- une étape de génération d'un signal vocal bruité par combinaison du signal vocal de référence numérisé et du signal de bruits numérisé,
- une étape de traitement du signal vocal bruité par les moyens de traitement pour obtenir des caractéristiques vocales du signal vocal bruité et création du profil vocal contextuel à partir des caractéristiques vocales du signal vocal bruité.

Selon d'autres caractéristiques de l'invention :
- l'étape d'acquisition et de numérisation des bruits présents dans le véhicule est réalisée de manière continue pendant l'utilisation du véhicule tant que l'étape d'acquisition et numérisation d'un signal vocal d'un utilisateur n'est pas en cours de réalisation, le signal de bruits numérisé étant mémorisé dans la mémoire sous forme d'un échantillon de durée déterminée, le dernier échantillon mémorisé écrasant l'avant dernier échantillon mémorisé, de sorte que le profil vocal contextuel prend en compte les bruits présents dans le véhicule immédiatement avant l'étape d'acquisition et numérisation d'un signal vocal d'un utilisateur ;
- l'étape initiale est réalisée dans un contexte d'utilisation du véhicule correspondant à un niveau sonore minimum ;
- l'étape de traitement du signal numérisé pour obtenir des caractéristiques vocales du signal numérisé est déclenchée lorsque des mots de référence sont reconnus par les moyens de traitement dans le signal numérisé ;
- le contexte d'utilisation du véhicule prédéterminé est défini par une vitesse du véhicule, un régime de rotation du moteur, un état du système de climatisation du véhicule, un état d'ouverture ou de fermeture des ouvrants et/ou vitrages du véhicule, ou un état des hauts parleurs du véhicule ;
- plusieurs profils vocaux contextuels sont mémorisés dans la mémoire et les étapes de comparaison des caractéristiques vocales, d'établissement d'un taux de correspondance, de comparaison du taux de correspondance et d'identification sont effectuées tant que l'utilisateur n'est pas identifié à une personne correspondant à l'un des profils vocaux contextuels seulement pour chacun des profils vocaux contextuels correspondant à un contexte d'utilisation du véhicule prédéterminé similaire au contexte d'utilisation du véhicule au moment de l'étape d'acquisition et de numérisation du signal vocal d'un utilisateur ;
- le véhicule comporte au moins deux emplacements équipés de moyens d'acquisition de signaux sonores et le procédé comporte en outre dans la phase d'identification, entre les étapes d'acquisition et de numérisation du signal vocal d'un utilisateur et de traitement du signal numérisé, une étape de localisation du signal pour obtenir un signal numérisé localisé en associant au signal numérisé une information indiquant depuis lequel des emplacements le signal vocal a été acquis ;
- les étapes de la phase d'identification sont réalisées pour deux signaux vocaux dont un premier signal vocal émis par un utilisateur présent dans le premier emplacement et un deuxième signal vocal émis par un utilisateur présent dans le deuxième emplacement, et le procédé comporte en outre dans la phase d'identification, après l'étape de localisation du signal, une étape d'annulation, l'étape d'annulation associée au premier signal vocal correspondant à l'annulation dans le signal numérisé localisé correspondant au premier emplacement d'une composante correspondant au deuxième signal vocal, l'étape d'annulation associée au deuxième signal vocal correspondant à l'annulation dans le signal numérisé localisé correspondant au deuxième emplacement d'une composante correspondant au premier signal vocal ;
- les étapes de comparaison des caractéristiques vocales, d'établissement d'un taux de correspondance, de comparaison du taux de correspondance et d'identification sont effectuées pour un emplacement, tant que l'utilisateur dudit emplacement n'est pas identifié à une personne correspondant à l'un des profils vocaux contextuels, seulement pour chacun des profils vocaux contextuels correspondant à une personne non encore identifiée dans le véhicule au moment de l'étape en cours.

D'autres caractéristiques et avantages de l'invention apparaitront au cours de la lecture de la description détaillée qui va suivre pour la compréhension de laquelle on se reportera aux dessins annexés dans lesquels :
La figure 1 représente schématiquement un système permettant de mettre en oeuvre un procédé selon l'invention ;
La figure 2 est un organigramme des étapes d'un procédé selon l'invention ;
La figure 3 illustre les opérations réalisées aux étapes Ea à Ef du procédé de la figure 2 ;
La figure 4 est un organigramme montrant des étapes supplémentaires pouvant être réalisées entre les étapes Ea et Eb du procédé de la figure 2 ;
La figure 5 est un organigramme de l'étape initiale et des étapes de la phase préliminaire du procédé de la figure 2 ;
La figure 6 est un graphique qui représente, de manière comparative et pour plusieurs essais, le taux de correspondance entre un signal vocal féminin et un profil vocal correspondant obtenu au moyen d'un procédé selon l'art antérieur et celui obtenu au moyen d'un procédé selon l'invention ;
La figure 7 est un graphique qui représente, de manière comparative et pour plusieurs essais, le taux de correspondance entre un signal vocal masculin et un profil vocal correspondant obtenu au moyen d'un procédé selon l'art antérieur et celui obtenu au moyen d'un procédé selon l'invention.

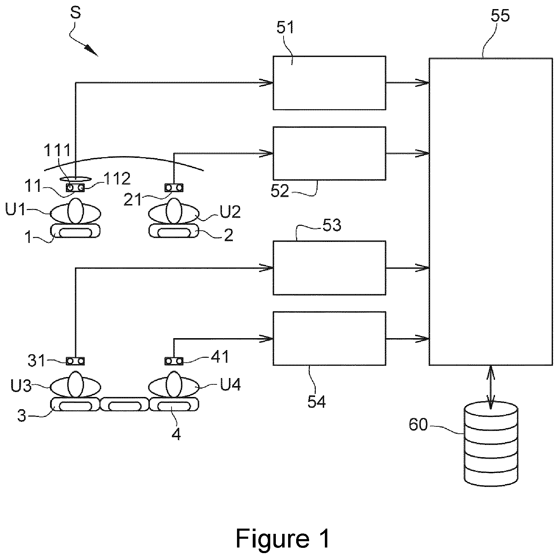

A la figure 1, un exemple de système S de reconnaissance vocale permettant de mettre en oeuvre un procédé selon l'invention est donné. Le système S de reconnaissance vocale est embarqué à bord d'un véhicule automobile.

Le système S de reconnaissance vocale comporte des moyens d'acquisition 11, 21, 31, 41 de signaux sonores dans l'habitacle du véhicule, des moyens de traitement 51, 52, 53, 54, 55 de ces signaux sonores et une mémoire 60.

Dans l'exemple représenté, le véhicule comporte quatre emplacements 1, 2, 3, 4 équipés de moyens d'acquisition 11, 21, 31, 41 respectivement. Chaque moyen d'acquisition 11, 21, 31, 41 est un microphone. Ici chaque microphone comporte un premier capteur 111 et un deuxième capteur 112 pour permettre de localiser une information sonore en fonction d'un décalage temporel entre l'enregistrement de cette information sonore effectué par le premier capteur 111 et celui effectué par le deuxième capteur 112.

Les moyens de traitement 51, 52, 53, 54, 55 comportent :
- des moyens de traitement spécifiques 51, 52, 53, 54 à chaque moyen d'acquisition 11, 21, 31, 41 respectivement, et
- des moyens de traitement communs 55.

La mémoire 60 est couplée aux moyens de traitement communs 55. La mémoire 60 est configurée pour mémoriser des profils vocaux. Chaque profil vocal comporte un ensemble de caractéristiques vocales spécifique d'une personne précédemment identifiée.

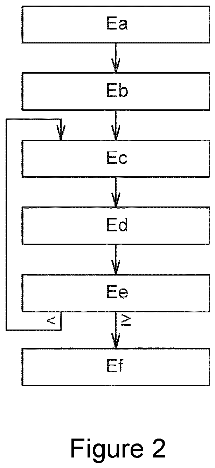

En référence à la figure 2, le procédé comporte une phase d'identification comprenant les étapes suivantes :
- Ea : acquisition et numérisation d'un signal vocal d'un utilisateur par les moyens d'acquisition pour obtenir un signal numérisé,
- Eb : traitement du signal numérisé par les moyens de traitement pour obtenir des caractéristiques vocales du signal numérisé,
- Ec : comparaison des caractéristiques vocales du signal numérisé avec un profil vocal sélectionné dans la mémoire,
- Ed : établissement d'un taux de correspondance, en fonction de ladite comparaison, entre les caractéristiques vocales du signal numérisé et le profil vocal sélectionné,
- Ee : comparaison du taux de correspondance avec un seuil prédéfini,
- Ef : si le taux de correspondance est supérieur ou égal au seuil prédéfini,
identification de l'utilisateur à la personne correspondant au profil vocal sélectionné. Si le taux de correspondance n'est pas supérieur ou égal au seuil prédéfini, l'utilisateur n'est pas identifié.

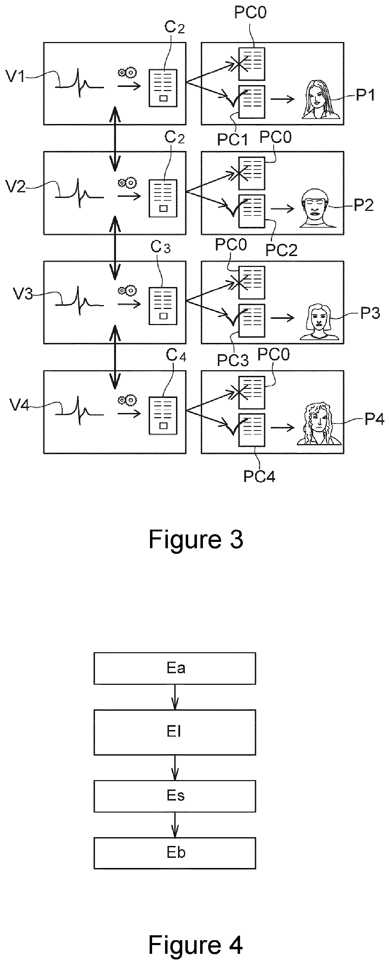

Le contenu de chaque étape du procédé de la figure 2 est décrit en référence à la figure 3.

Dans l'exemple, chaque moyen d'acquisition 11, 21, 31, 41 peut mettre en oeuvre l'étape Ea.

Un signal vocal d'un utilisateur U1 est acquis et numérisé par le moyen d'acquisition 11 pour obtenir un signal numérisé V1. Un signal vocal d'un utilisateur U2 est acquis et numérisé par le moyen d'acquisition 21 pour obtenir un signal numérisé V2. Un signal vocal d'un utilisateur U3 est acquis et numérisé par le moyen d'acquisition 31 pour obtenir un signal numérisé V3. Un signal vocal d'un utilisateur U4 est acquis et numérisé par le moyen d'acquisition 41 pour obtenir un signal numérisé V4.

Les signaux vocaux des utilisateurs U1, U2, U3, U4 peuvent être acquis et numérisés simultanément ou à des moments distincts.

L'étape Eb peut être déclenchée lorsque des mots de référence sont reconnus par les moyens de traitement dans un signal numérisé V1, V2, V3 ou V4. Ces mots de référence forment par exemple une courte phrase appelée phrase clef. Dans ce cas, l'étape Ea est réalisée en continu, c'est-à-dire que chacun des moyens d'acquisition réalise une acquisition en continu lorsque le contact du véhicule est mis pour obtenir un signal numérisé V1, V2, V3 ou V4. Le signal numérisé V1, V2, V3 ou V4 est ensuite traité par le système de reconnaissance vocale pour y reconnaitre les mots de référence. Si les mots de référence sont reconnus dans le signal numérisé V1, V2, V3 ou V4, l'étape Eb est déclenchée.

Au cours de l'étape Eb, chaque signal numérisé V1, V2, V3, V4 est traité par les moyens de traitement et en particulier par les moyens de traitement communs 55 pour obtenir des caractéristiques vocales C1, C2, C3, C4 du signal numérisé V1, V2, V3, V4 respectivement.

Les caractéristiques vocales C1, C2, C3, C4, appelées empreintes vocales, sont par exemple crées à partir de vecteurs d'identification acoustiques correspondant à des tranches de quelques millisecondes de signal de parole. Ces vecteurs acoustiques peuvent être obtenus par une technique d'analyse fréquentielle basée sur des calculs de coefficients cepstraux tels que proposés par la méthode connue sous l'acronyme anglais MFCC ( « Mel-Frequency Cepstral Coefficients ») associant la transformée de Fourier pondérée à court terme et la transformée en Cosinus Discret.

Au cours d'une première itération de l'étape Ec, les moyens de traitement communs 55 comparent les caractéristiques vocales C1 du signal numérisé V1 avec un premier profil vocal contextuel PC0.

Chaque profil vocal contextuel est spécifique d'une personne et d'un contexte d'utilisation du véhicule. Un profil vocal contextuel comporte les caractéristiques vocales d'un signal sonore comprenant :
- un signal vocal de référence émis par une personne précédemment identifiée, et
- des bruits présents dans le véhicule dans un contexte d'utilisation du véhicule prédéterminé.

Puis, au cours d'une première itération de l'étape Ed, les moyens de traitement communs 55 établissent un taux de correspondance, en fonction de la comparaison effectuée à la première itération de l'étape Ec, entre les caractéristiques vocales C1 du signal numérisé V1 et le premier profil vocal sélectionné PC0.

Ensuite, lors d'une première itération de l'étape Ee, les moyens de traitement communs 55 comparent le taux de correspondance établi à la première itération de l'étape Ed avec un seuil prédéfini.

Dans l'exemple, le taux de correspondance établi à la première itération de l'étape Ed est inférieur au seuil prédéfini ce qui entraîne une deuxième itération de l'étape Ec.

Au cours de la deuxième itération de l'étape Ec, les moyens de traitement communs 55 comparent les caractéristiques vocales C1 du signal numérisé V1 avec un deuxième profil vocal contextuel PC1. Le deuxième profil vocal contextuel PC1 correspond à une personne P1 précédemment identifiée différente de la personne correspondant au premier profil vocal contextuel PC0.

Puis, au cours d'une deuxième itération de l'étape Ed, les moyens de traitement communs 55 établissent un taux de correspondance, en fonction de la comparaison effectuée à la deuxième itération de l'étape Ec, entre les caractéristiques vocales C1 du signal numérisé V1 et le deuxième profil vocal contextuel PC1.

Ensuite, lors d'une deuxième itération de l'étape Ee, les moyens de traitement communs 55 comparent le taux de correspondance établi à la deuxième itération de l'étape Ed avec le seuil prédéfini.

Dans l'exemple, le taux de correspondance établi à la deuxième itération de l'étape Ed est supérieur ou égal au seuil prédéfini ce qui entraîne l'identification de l'utilisateur U1 ayant émis le signal numérisé V1 à la personne P1 correspondant au deuxième profil vocal contextuel PC1.

De manière analogue, mutatis mutandis, les étapes Ec à Ef sont réalisées pour chacun des signaux numérisés V2 à V4 ce qui conduit à l'identification de :
- l'utilisateur U2 ayant émis le signal numérisé V2 à la personne P2 correspondant au profil vocal contextuel PC2 ;
- l'utilisateur U3 ayant émis le signal numérisé V3 à la personne P3 correspondant au profil vocal contextuel PC3 ;
- l'utilisateur U4 ayant émis le signal numérisé V4 à la personne P4 correspondant au profil vocal contextuel PC4.

Dans l'exemple, les étapes Ec à Ef sont effectuées tant que l'utilisateur n'est pas identifié à une personne correspondant à l'un des profils vocaux contextuels seulement pour chacun des profils vocaux contextuels correspondant à un contexte d'utilisation du véhicule prédéterminé similaire au contexte d'utilisation du véhicule au moment de l'étape Ea d'acquisition et de numérisation du signal vocal.

Les profils vocaux contextuels utilisés dans une étape Ec sont ceux de personnes non encore identifiée dans le véhicule au moment de l'étape Ec en cours.

En référence à la figure 4, le procédé comporte en outre ici, entre les étapes Ea et Eb, une étape El de localisation du signal pour obtenir un signal numérisé localisé en associant au signal numérisé une information indiquant depuis lequel des emplacements 1, 2, 3 ou 4 le signal vocal a été acquis.

L'étape El est réalisée par les moyens de traitement spécifiques 51, 52, 53, 54.

Au cours de l'étape El, le moyen de traitement spécifique 51 associe au signal numérisé V1 une information indiquant que le signal vocal a été acquis depuis le premier emplacement 1.

De manière analogue :
- le moyen de traitement spécifique 52 associe au signal numérisé V2 une information indiquant que le signal vocal a été acquis depuis le deuxième emplacement 2,
- le moyen de traitement spécifique 53 associe au signal numérisé V3 une information indiquant que le signal vocal a été acquis depuis le troisième emplacement 3,
- le moyen de traitement spécifique 54 associe au signal numérisé V4 une information indiquant que le signal vocal a été acquis depuis le quatrième emplacement 4.

Le procédé comporte en outre ici, après l'étape El, une étape Es d'annulation dans le signal numérisé V1 localisé correspondant au premier emplacement 1 des composantes correspondant aux signaux vocaux acquis depuis les autres emplacements 2, 3 et 4. Ainsi, dans le signal obtenu après l'étape Es, seule la voix de l'utilisateur U1 est présente et les voix des utilisateurs U2, U3 et U4 ont été annulées.

L'étape Es est réalisée de manière analogue dans les signaux numérisés V2, V3 et V4.

L'étape Es est réalisée par les moyens de traitement communs 55.

Dans le cas d'acquisitions de plusieurs signaux vocaux de plusieurs utilisateurs, les étapes de la phase d'identification sont réalisées pour chaque signal, en parallèle si les signaux vocaux se recouvrent dans le temps, simultanément ou non selon la synchronisation des signaux vocaux entre eux.

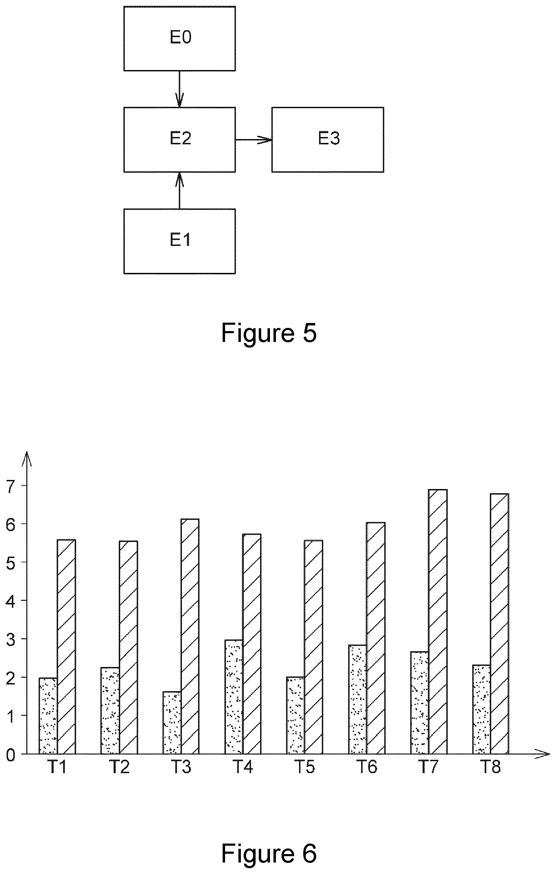

La figure 5 montre des étapes permettant l'obtention d'un profil vocal contextuel. Ces étapes comportent une étape initiale E0 et trois étapes E1, E2, E3 d'une phase préliminaire.

L'étape initiale est la suivante :
- E0 : acquisition et numérisation d'un signal vocal de référence, émis par une personne précédemment identifiée, par les moyens d'acquisition, pour obtenir un signal vocal de référence numérisé.

L'étape initiale E0 est classiquement réalisée dans un contexte d'utilisation du véhicule correspondant à un niveau sonore minimum. Ce contexte correspond par exemple à un véhicule démarré et à l'arrêt. Les fonctionnalités bruyantes telles que la climatisation ou la radiophonie peuvent être suspendues pendant l'étape E0 et les ouvrants et vitrages refermés.

Le signal vocal de référence correspond par exemple à la répétition d'un ensemble de mots de référence. Ces mots de référence peuvent être utilisés par la suite pour déclencher l'étape Eb.

La phase préliminaire comporte les étapes suivantes :
- E1 : acquisition et numérisation des bruits présents dans le véhicule, dans un contexte d'utilisation du véhicule prédéterminé, par les moyens d'acquisition, pour obtenir un signal de bruits numérisé,
- E2 : génération d'un signal vocal bruité par combinaison du signal vocal de référence numérisé et du signal de bruits numérisé,
- E3 : traitement du signal vocal bruité par les moyens de traitement pour obtenir des caractéristiques vocales du signal vocal bruité et création du profil vocal contextuel à partir des caractéristiques vocales du signal vocal bruité.

L'étape E1 d'acquisition et de numérisation des bruits présents dans le véhicule est réalisée de manière continue pendant l'utilisation du véhicule tant que l'étape Ea n'est pas en cours de réalisation, le signal de bruits numérisé étant mémorisé dans la mémoire sous forme d'un échantillon de durée déterminée, le dernier échantillon mémorisé écrasant l'avant dernier échantillon mémorisé, de sorte que le profil vocal contextuel prend en compte les bruits présents dans le véhicule immédiatement avant l'étape Ea d'acquisition et de numérisation d'un signal vocal d'un utilisateur.

Dans la pratique, l'étape E1 et l'étape Ea peuvent correspondre à la même opération d'acquisition et de numérisation d'un message sonore numérisé réalisée par les moyens d'acquisition 11, 21, 31, 41. Le signal sonore numérisé est ensuite traité par le système de reconnaissance vocale pour déterminer s'il contient des mots de référence. Si le signal sonore numérisé contient des mots de référence, l'étape réalisée est considérée comme étant l'étape Ea et l'étape Eb est déclenchée. Si le signal sonore numérisé ne contient pas de mot de référence, l'étape réalisée est considérée comme étant l'étape E1.

En variante, l'étape E1 de la phase préliminaire peut être déclenchée lorsqu'un changement de contexte d'utilisation du véhicule est détecté.

L'étape E2 de génération d'un signal vocal bruité par combinaison du signal vocal de référence numérisé et du signal de bruits numérisé peut être déclenchée simultanément au déclenchement de l'étape Eb.

La combinaison du signal vocal de référence numérisé et du signal de bruits numérisé peut être réalisée par addition des signaux.

L'étape E3 de traitement du signal vocal bruité pour obtenir des caractéristiques vocales du signal vocal bruité et de création du profil vocal contextuel à partir des caractéristiques vocales du signal vocal bruité est déclenchée automatiquement après l'étape E2. Le traitement pour obtenir des caractéristiques vocales du signal est le même que celui réalisé à l'étape Eb.

L'ensemble des caractéristiques vocales du signal bruité est enregistré dans la mémoire 60 sous forme d'un profil vocal contextuel.

Le profil vocal contextuel est :
- spécifique de la personne ayant émis le signal vocal de référence à l'étape E0, et
- spécifique du contexte d'utilisation du véhicule au moment de l'étape E1.

Le contexte d'utilisation du véhicule peut être défini par :
- la vitesse du véhicule,
- le régime de rotation du moteur,
- l'état du système de climatisation du véhicule,
- l'état d'ouverture ou de fermeture des ouvrants et/ou vitrages du véhicule, ou
- l'état des hauts parleurs du véhicule.

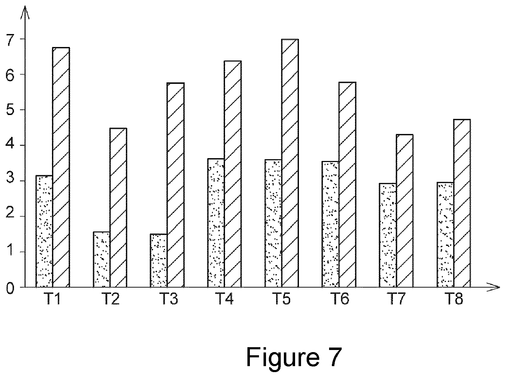

Les figures 6 et 7 montrent de manière comparative la performance d'une identification réalisée avec un procédé selon l'art antérieur et la performance d'une identification réalisée avec un procédé selon l'invention.

La figure 6 correspond à des tests T1 à T8 réalisés sur des voix féminines.

La figure 7 correspond à des tests T1 à T8 réalisés sur des voix masculines.

Pour chacun des tests, deux taux de correspondance sont représentés dont un taux obtenu avec un procédé selon l'art antérieur représenté par une barre grisée et un taux obtenu par le procédé selon l'invention représenté par une barre hachurée. Dans le procédé selon l'art antérieur, le taux de correspondance est calculé entre un signal vocal et un profil vocal correspondant, le profil vocal étant obtenu à partir d'un signal de référence non bruité. Dans le procédé selon l'invention, le taux de correspondance est calculé entre un signal vocal et un profil vocal contextuel correspondant, le profil vocal contextuel étant obtenu à partir d'un signal de référence combiné à un signal de bruit correspondant au contexte d'utilisation du véhicule.

Il apparaît que les taux de correspondance du procédé selon l'invention sont supérieurs à ceux du procédé selon l'art antérieur. Par conséquent, l'invention permet d'améliorer les performances d'une identification de personnes à bord d'un véhicule automobile par analyse vocale.

On comprendra que diverses modifications et/ou améliorations évidentes pour l'homme du métier peuvent être apportées aux différents modes de réalisation de l'invention décrits ou évoqués dans la présente description sans sortir du cadre de l'invention. En particulier, il est possible de combiner les différents modes de réalisation entre eux.

Le procédé d'identification de l'invention est adaptatif et permet une identification optimisée d'une personne à bord d'un véhicule.

## Revendications

1. Procédé d'identification d'au moins une personne à bord d'un véhicule automobile par analyse vocale, le véhicule étant équipé de moyens d'acquisition de signaux sonores dans l'habitacle du véhicule, de moyens de traitement de ces signaux sonores et d'une mémoire couplée aux moyens de traitement et configurée pour mémoriser des profils vocaux, chaque profil vocal comportant un ensemble de caractéristiques vocales spécifique d'une personne précédemment identifiée, le procédé comportant une phase d'identification comprenant les étapes suivantes :
- une étape d'acquisition et numérisation d'un signal vocal d'un utilisateur (Ea) par les moyens d'acquisition pour obtenir un signal numérisé,
- une étape de traitement du signal numérisé (Eb) par les moyens de traitement pour obtenir des caractéristiques vocales du signal numérisé,
- une étape de comparaison des caractéristiques vocales (Ec) du signal numérisé avec un profil vocal sélectionné dans la mémoire,
- une étape d'établissement d'un taux de correspondance (Ed), en fonction de ladite comparaison entre les caractéristiques vocales du signal numérisé et le profil vocal sélectionné,
- une étape de comparaison du taux de correspondance (Ee) avec un seuil prédéfini,
- une étape d'identification (Ef) selon laquelle si le taux de correspondance est supérieur ou égal au seuil prédéfini, l'utilisateur est identifié comme étant la personne correspondant au profil vocal sélectionné,
le procédé étant **caractérisé en ce que** le profil vocal sélectionné à l'étape de comparaison des caractéristiques vocales (Ec) est un profil vocal contextuel comportant les caractéristiques vocales d'un signal sonore comprenant un signal vocal de référence émis par une personne précédemment identifiée et des bruits présents dans le véhicule dans un contexte d'utilisation du véhicule prédéterminé.

2. Procédé d'identification selon la revendication 1, **caractérisé en ce que** le profil vocal contextuel est obtenu dans une phase préliminaire effectuée après une étape initiale (E0) d'acquisition et numérisation d'un signal vocal de référence, émis par une personne précédemment identifiée, par les moyens d'acquisition, pour obtenir un signal vocal de référence numérisé,
et **en ce que** la phase préliminaire comporte les étapes suivantes :
- une étape d'acquisition et numérisation des bruits présents dans le véhicule (E1), dans un contexte d'utilisation du véhicule prédéterminé, par les moyens d'acquisition, pour obtenir un signal de bruits numérisé,
- une étape de génération d'un signal vocal bruité (E2) par combinaison du signal vocal de référence numérisé et du signal de bruits numérisé,
- une étape de traitement du signal vocal bruité (E3) par les moyens de traitement pour obtenir des caractéristiques vocales du signal vocal bruité et création du profil vocal contextuel à partir des caractéristiques vocales du signal vocal bruité.

3. Procédé d'identification selon la revendication 2, **caractérisé en ce que** l'étape d'acquisition et de numérisation des bruits présents dans le véhicule (E1) est réalisée de manière continue pendant l'utilisation du véhicule tant que l'étape d'acquisition et numérisation d'un signal vocal d'un utilisateur (Ea) n'est pas en cours de réalisation, le signal de bruits numérisé étant mémorisé dans la mémoire sous forme d'un échantillon de durée déterminée, le dernier échantillon mémorisé écrasant l'avant dernier échantillon mémorisé, de sorte que le profil vocal contextuel prend en compte les bruits présents dans le véhicule immédiatement avant l'étape d'acquisition et numérisation d'un signal vocal d'un utilisateur (Ea).

4. Procédé d'identification selon l'une quelconque des revendications 2 ou 3, **caractérisé en ce que** l'étape initiale (E0) est réalisée dans un contexte d'utilisation du véhicule correspondant à un niveau sonore minimum.

5. Procédé d'identification selon l'une quelconque des revendications précédentes, **caractérisé en ce que** l'étape de traitement du signal numérisé (Eb) pour obtenir des caractéristiques vocales du signal numérisé est déclenchée lorsque des mots de référence sont reconnus par les moyens de traitement dans le signal numérisé.

6. Procédé d'identification selon l'une quelconque des revendications précédentes, **caractérisé en ce que** le contexte d'utilisation du véhicule prédéterminé est défini par :
- une vitesse du véhicule,
- un régime de rotation du moteur,
- un état du système de climatisation du véhicule,
- un état d'ouverture ou de fermeture d'ouvrants ou de vitrages du véhicule, ou
- un état des hauts parleurs du véhicule.

7. Procédé d'identification selon l'une quelconque des revendications précédentes, **caractérisé en ce que** plusieurs profils vocaux contextuels sont mémorisés dans la mémoire et **en ce que** les étapes de comparaison des caractéristiques vocales (Ec), d'établissement d'un taux de correspondance (Ed), de comparaison du taux de correspondance (Ee) et d'identification (Ef) sont effectuées tant que l'utilisateur n'est pas identifié à une personne correspondant à l'un des profils vocaux contextuels seulement pour chacun des profils vocaux contextuels correspondant à un contexte d'utilisation du véhicule prédéterminé similaire au contexte d'utilisation du véhicule au moment de l'étape d'acquisition et de numérisation du signal vocal d'un utilisateur (Ea).

8. Procédé d'identification selon l'une quelconque des revendications précédentes, **caractérisé en ce que** le véhicule comporte au moins deux emplacements équipés de moyens d'acquisition de signaux sonores et **en ce que** le procédé comporte en outre dans la phase d'identification, entre les étapes d'acquisition et de numérisation du signal vocal d'un utilisateur (Ea)et de traitement du signal numérisé (Eb), une étape de localisation du signal (El) pour obtenir un signal numérisé localisé en associant au signal numérisé une information indiquant depuis lequel des emplacements le signal vocal a été acquis.

9. Procédé d'identification selon la revendication 8, **caractérisé en ce que** les étapes (Ea, Eb, Ec, Ed, Ee, Ef, El) de la phase d'identification sont réalisées pour deux signaux vocaux dont un premier signal vocal émis par un utilisateur présent dans le premier emplacement et un deuxième signal vocal émis par un utilisateur présent dans le deuxième emplacement, et **en ce que** le procédé comporte en outre dans la phase d'identification, après l'étape de localisation du signal (El), une étape d'annulation (Es), l'étape d'annulation (Es) associée au premier signal vocal correspondant à l'annulation dans le signal numérisé localisé correspondant au premier emplacement d'une composante correspondant au deuxième signal vocal, l'étape d'annulation (Es) associée au deuxième signal vocal correspondant à l'annulation dans le signal numérisé localisé correspondant au deuxième emplacement d'une composante correspondant au premier signal vocal.

10. Procédé d'identification selon l'une quelconque des revendications 8 ou 9, **caractérisé en ce que** les étapes de comparaison des caractéristiques vocales (Ec), d'établissement d'un taux de correspondance (Ed), de comparaison du taux de correspondance (Ee) et d'identification (Ef) sont effectuées pour un emplacement, tant que l'utilisateur dudit emplacement n'est pas identifié à une personne correspondant à l'un des profils vocaux contextuels, seulement pour chacun des profils vocaux contextuels correspondant à une personne non encore identifiée dans le véhicule au moment de l'étape en cours.

## Patentansprüche

1. Verfahren zur Identifizierung mindestens einer Person an Bord eines Kraftfahrzeugs durch Stimmanalyse, wobei das Fahrzeug mit Erfassungsmitteln zum Erfassen von Schallsignalen in dem Innenraum des Fahrzeugs, mit Verarbeitungsmitteln zum Verarbeiten dieser Schallsignale und mit einem Speicher, der mit den Verarbeitungsmitteln gekoppelt ist und dazu ausgestaltet ist, Stimmprofile zu speichern, ausgestattet ist, wobei jedes Stimmprofil einen spezifischen Satz von Stimmmerkmalen einer zuvor identifizierten Person umfasst, wobei das Verfahren eine Identifizierungsphase beinhaltet, welche die folgenden Schritte umfasst:
- einen Schritt des Erfassens und Digitalisierens eines Stimmsignals eines Benutzers (Ea) durch die Erfassungsmittel, um ein digitalisiertes Signal zu erhalten,
- einen Schritt des Verarbeitens des digitalisierten Signals (Eb) durch die Verarbeitungsmittel, um Stimmmerkmale des digitalisierten Signals zu erhalten,
- einen Schritt des Vergleichens der Stimmmerkmale (Ec) des digitalisierten Signals mit einem in dem Speicher ausgewählten Stimmprofil,
- einen Schritt des Ermittelns einer Übereinstimmungsrate (Ed) in Abhängigkeit von dem Vergleich zwischen den Stimmmerkmalen des digitalisierten Signals und dem ausgewählten Stimmprofil,
- einen Schritt des Vergleichens der Übereinstimmungsrate (Ee) mit einem vorgegebenen Schwellenwert,
- einen Schritt des Identifizierens (Ef), gemäß dem, wenn die Übereinstimmungsrate größer als oder gleich dem vorgegebenen Schwellenwert ist, der Benutzter als die Person identifiziert wird, die dem ausgewählten Stimmprofil entspricht,
wobei das Verfahren **dadurch gekennzeichnet ist, dass** das im Schritt des Vergleichens der Stimmmerkmale (Ec) ausgewählte Stimmprofil ein kontextuelles Stimmprofil ist, das die Stimmmerkmale eines Schallsignals beinhaltet, das ein von einer zuvor identifizierten Person ausgesendetes Referenzstimmsignal und Geräusche, die in dem Fahrzeug in einem vorbestimmten Nutzungskontext des Fahrzeugs vorhanden sind, umfasst.

2. Verfahren zur Identifizierung nach Anspruch 1, **dadurch gekennzeichnet, dass** das kontextuelle Stimmprofil in einer vorbereitenden Phase erhalten wird, die nach einem anfänglichen Schritt (E0) des Erfassens und Digitalisierens eines Referenzstimmsignals, das von einer zuvor identifizierten Person ausgesendet wird, durch die Erfassungsmittel, um ein digitalisiertes Referenzstimmsignal zu erhalten, durchgeführt wird,
und dadurch, dass die vorbereitende Phase die folgenden Schritte umfasst:
- einen Schritt des Erfassens und Digitalisierens der in dem Fahrzeug (E1) in einem vorbestimmten Nutzungskontext des Fahrzeugs vorhandenen Geräusche durch die Erfassungsmittel, um ein digitalisiertes Geräuschsignal zu erhalten,
- einen Schritt des Erzeugens eines geräuschbehafteten Stimmsignals (E2) durch Kombinieren des digitalisierten Referenzstimmsignals und des digitalisierten Geräuschsignals,
- einen Schritt des Verarbeitens des geräuschbehafteten Stimmsignals (E3) durch die Verarbeitungsmittel, um Stimmmerkmale des geräuschbehafteten Stimmsignals zu erhalten, und Erstellen des kontextuellen Stimmprofils anhand der Stimmmerkmale des geräuschbehafteten Stimmsignals.

3. Verfahren zur Identifizierung nach Anspruch 2, **dadurch gekennzeichnet, dass** der Schritt des Erfassens und Digitalisierens der in dem Fahrzeug (E1) vorhandenen Geräusche während der Nutzung des Fahrzeugs kontinuierlich ausgeführt wird, solange der Schritt des Erfassens und Digitalisierens eines Stimmsignals eines Benutzers (Ea) nicht in Ausführung befindlich ist, wobei das digitalisierte Geräuschsignal in dem Speicher in Form eines Musters von bestimmter Dauer gespeichert wird, wobei das letzte gespeicherte Muster das vorletzte gespeicherte Muster überschreibt, so dass das kontextuelle Stimmprofil die Geräusche berücksichtigt, die in dem Fahrzeug unmittelbar vor dem Schritt des Erfassens und Digitalisierens eines Stimmsignals eines Benutzers (Ea) vorhanden sind.

4. Verfahren zur Identifizierung nach einem der Ansprüche 2 oder 3, **dadurch gekennzeichnet, dass** der anfängliche Schritt (E0) in einem Nutzungskontext des Fahrzeugs ausgeführt wird, der einem minimalen Schallpegel entspricht.

5. Verfahren zur Identifizierung nach einem der vorhergehenden Ansprüche, **dadurch gekennzeichnet, dass** der Schritt des Verarbeitens des digitalisierten Signals (Eb), um Stimmmerkmale des digitalisierten Signals zu erhalten, ausgelöst wird, wenn Referenzwörter von den Verarbeitungsmitteln in dem digitalisierten Signal erkannt werden.

6. Verfahren zur Identifizierung nach einem der vorhergehenden Ansprüche, **dadurch gekennzeichnet, dass** der vorbestimmte Nutzungskontext des Fahrzeugs definiert wird durch:
- eine Geschwindigkeit des Fahrzeugs,
- eine Drehzahl des Motors,
- einen Zustand des Klimatisierungssystems des Fahrzeugs,
- einen Öffnungs- oder Schließzustand von Türen oder Scheiben des Fahrzeugs oder
- einen Zustand der Lautsprecher des Fahrzeugs.

7. Verfahren zur Identifizierung nach einem der vorhergehenden Ansprüche, **dadurch gekennzeichnet, dass** mehrere kontextuelle Stimmprofile in dem Speicher gespeichert sind und dass die Schritte des Vergleichens der Stimmmerkmale (Ec), des Ermittelns einer Übereinstimmungsrate (Ed), des Vergleichens der Übereinstimmungsrate (Ee) und des Identifizierens (Ef) durchgeführt werden, solange der Benutzer nicht als eine Person identifiziert ist, die nur einem der kontextuellen Stimmprofile für jedes der kontextuellen Stimmprofile entspricht, die einem vorbestimmten Nutzungskontext des Fahrzeugs entsprechen, der dem Nutzungskontext des Fahrzeugs zum Zeitpunkt des Erfassens und Digitalisierens des Stimmsignals eines Benutzers (Ea) ähnlich ist.

8. Verfahren zur Identifizierung nach einem der vorhergehenden Ansprüche, **dadurch gekennzeichnet, dass** das Fahrzeug mindestens zwei Plätze aufweist, die mit Erfassungsmitteln zum Erfassen von Schallsignalen ausgestattet sind, und dadurch, dass das Verfahren ferner in der Identifizierungsphase, zwischen den Phasen des Erfassens und Digitalisierens des Stimmsignals eines Benutzers (Ea) und des Verarbeitens des digitalisieren Signals (Eb), einen Schritt des Ortens des Signals (El) umfasst, um ein geortetes digitalisiertes Signal zu erhalten, indem dem digitalisierten Signal eine Information zugeordnet wird, die angibt, von welchem der Plätze aus das Stimmsignal erfasst worden ist.

9. Verfahren zur Identifizierung nach Anspruch 8, **dadurch gekennzeichnet, dass** die Schritte (Ea, Eb, Ec, Ed, Ee, Ef, El) der Identifizierungsphase für zwei Stimmsignale ausgeführt werden, darunter ein erstes Stimmsignal, das von einem Benutzer ausgesendet wird, der sich auf dem ersten Platz befindet, und ein zweites Stimmsignal, das von einem Benutzer ausgesendet wird, der sich auf dem zweiten Platz befindet, und dadurch, dass das Verfahren ferner in der Identifizierungsphase, nach dem Schritt des Ortens des Signals (El), einen Schritt des Annullierens (Es) umfasst, wobei der dem ersten Stimmsignal zugeordnete Schritt des Annullierens (Es) dem Annullieren, in dem dem ersten Platz entsprechenden georteten Stimmsignal, einer dem zweiten Stimmsignal entsprechenden Komponente entspricht, wobei der dem zweiten Stimmsignal zugeordnete Schritt des Annullierens (Es), dem Annullieren, in dem dem zweiten Platz entsprechenden georteten digitalen Signal, einer dem ersten Stimmsignal entsprechenden Komponente entspricht.

10. Verfahren zur Identifizierung nach einem der Ansprüche 8 oder 9, **dadurch gekennzeichnet, dass** die Schritte des Vergleichens der Stimmmerkmale (Ec), des Ermittelns einer Übereinstimmungsrate (Ed), des Vergleichens der Übereinstimmungsrate (Ee) und des Identifizierens (Ef) für einen Platz durchgeführt werden, solange der Benutzer des Platzes nicht als eine Person identifiziert ist, die nur einem der kontextuellen Stimmprofile für jedes der kontextuellen Stimmprofile entspricht, die einer Person entsprechen, die in dem Fahrzeug zum Zeitpunkt des laufenden Schritts noch nicht identifiziert ist.

## Claims

1. Method for identifying at least one person aboard a motor vehicle by voice analysis, the vehicle being equipped with means for acquiring sound signals from the passenger compartment of the vehicle, with means for processing these sound signals and with a memory coupled to the processing means and configured to store voice profiles, each voice profile comprising a set of voice characteristics that is specific to a previously identified person, the method comprising an identification phase comprising the following steps:
- a step of acquiring and digitizing a voice signal of a user (Ea) by way of the acquisition means in order to obtain a digitized signal,
- a step of processing the digitized signal (Eb) by way of the processing means in order to obtain voice characteristics of the digitized signal,
- a step of comparing the voice characteristics (Ec) of the digitized signal with a voice profile selected from the memory,
- a step of establishing a match rate (Ed) according to said comparison between the voice characteristics of the digitized signal and the selected voice profile,
- a step of comparing the match rate (Ee) with a predefined threshold,
- a step of identification (Ef) according to which, if the match rate is above or equal to the predefined threshold, the user is identified as being the person corresponding to the selected voice profile,
the method being **characterized in that** the voice profile selected in the step of comparing the voice characteristics (Ec) is a contextual voice profile comprising the voice characteristics of a sound signal comprising a reference voice signal transmitted by a previously identified person and noise present in the vehicle within a use context of the predetermined vehicle.

2. Identification method according to Claim 1, **characterized in that** the contextual voice profile is obtained in a preliminary phase performed after an initial step (E0) of acquiring and digitizing a reference voice signal, transmitted by a previously identified person, by way of the acquisition means, in order to obtain a digitized reference voice signal,
and **in that** the preliminary phase comprises the following steps:
- a step of acquiring and digitizing noise present in the vehicle (E1), within a use context of the predetermined vehicle, by way of the acquisition means, in order to obtain a digitized noise signal,
- a step of generating a noisy voice signal (E2) by combining the digitized reference voice signal and the digitized noise signal,
- a step of processing the noisy voice signal (E3) by way of the processing means in order to obtain voice characteristics of the noisy voice signal and creating the contextual voice profile on the basis of the voice characteristics of the noisy voice signal.

3. Identification method according to Claim 2, **characterized in that** the step of acquiring and digitizing the noise present in the vehicle (E1) is performed continuously during use of the vehicle so long as the step of acquiring and digitizing a voice signal of a user (Ea) is not being performed, the digitized noise signal being stored in the memory in the form of a sample of determined duration, the last stored sample overwriting the penultimate stored sample, so that the contextual voice profile takes account of the noise present in the vehicle immediately before the step of acquiring and digitizing a voice signal of a user (Ea).

4. Identification method according to either one of Claims 2 and 3, **characterized in that** the initial step (E0) is performed within a use context of the vehicle corresponding to a minimum sound level.

5. Identification method according to any one of the preceding claims, **characterized in that** the step of processing the digitized signal (Eb) in order to obtain voice characteristics of the digitized signal is triggered when reference words are recognized by the processing means in the digitized signal.

6. Identification method according to any one of the preceding claims, **characterized in that** the predefined use context of the vehicle is defined by:
- a speed of the vehicle,
- a speed of the engine,
- a state of the air-conditioning system of the vehicle,
- an open or closed state of openings or glazings of the vehicle, or
- a state of the loudspeakers of the vehicle.

7. Identification method according to any one of the preceding claims, **characterized in that** multiple contextual voice profiles are stored in the memory and **in that** the steps of comparing the voice characteristics (Ec), establishing a match rate (Ed), comparing the match rate (Ee) and identification (Ef) are performed, so long as the user is not identified with a person corresponding to one of the contextual voice profiles, only for each of the contextual voice profiles corresponding to a use context of the predetermined vehicle similar to the use context of the vehicle at the time of the step of acquiring and digitizing the voice signal of a user (Ea).

8. Identification method according to any one of the preceding claims, **characterized in that** the vehicle comprises at least two locations equipped with means for acquiring sound signals and **in that** the method moreover comprises, in the identification phase, between the steps of acquiring and digitizing the voice signal of a user (Ea) and of processing the digitized signal (Eb), a step of localizing the signal (El) in order to obtain a localized digital signal by associating information indicating from which of the locations the voice signal has been acquired with the digitized signal.

9. Identification method according to Claim 8, **characterized in that** the steps (Ea, Eb, Ec, Ed, Ee, Ef, El) of the identification phase are performed for two voice signals, including a first voice signal transmitted by a user present in the first location and a second voice signal transmitted by a user present in the second location, and **in that** the method moreover comprises, in the identification phase, after the step of localizing the signal (El), a step of cancellation (Es), the step of cancellation (Es) associated with the first voice signal corresponding to the cancellation, in the localized digitized signal corresponding to the first location, of a component corresponding to the second voice signal, the step of cancellation (Es) associated with the second voice signal corresponding to the cancellation, in the localized digitized signal corresponding to the second location, of a component corresponding to the first voice signal.

10. Identification method according to either one of Claims 8 and 9, **characterized in that** the steps of comparing the voice characteristics (Ec), of establishing a match rate (Ed), of comparing the match rate (Ee) and of identification (Ef) are performed for a location, so long as the user of said location is not identified with a person corresponding to one of the contextual voice profiles, only for each of the contextual voice profiles corresponding to a person not yet identified in the vehicle at the time of the step that is being carried out.
